**Europäisches Patentamt**

**European Patent Office**

**Office européen des brevets**

(19)

(11) Veröffentlichungsnummer : **0 401 874 B1**

(12)

# EUROPÄISCHE PATENTSCHRIFT

(45) Veröffentlichungstag der Patentschrift :
**09.12.92 Patentblatt 92/50**

(51) Int. Cl.⁵ : **A01F 29/02**

(21) Anmeldenummer : **90114067.3**

(22) Anmeldetag : **12.12.85**

(54) **Messerradhäcksler.**

(30) Priorität : **22.12.84 DE 3447197**

(43) Veröffentlichungstag der Anmeldung :
**12.12.90 Patentblatt 90/50**

(45) Bekanntmachung des Hinweises auf die
Patenterteilung :
**09.12.92 Patentblatt 92/50**

(84) Benannte Vertragsstaaten :
**AT CH DE FR GB LI NL**

(56) Entgegenhaltungen :
**DE-U- 1 680 526**
**FR-A- 1 544 166**

(60) Veröffentlichungsnummer der früheren
Anmeldung nach Art. 76 EPü : **0 186 063**

(73) Patentinhaber : **Alois Pöttinger
Maschinenfabrik GmbH
A-4710 Grieskirchen (AT)**

(72) Erfinder : **Voraberger, Ulrich
Beethovenstrasse 4
A-4701 Bad Schallerbach (AT)**

(74) Vertreter : **Dupal, Helmut, Dipl-Ing.
Jägerweg 12
A-4702 Wallern (AT)**

EP 0 401 874 B1

**Beschreibung**

Die Erfindung bezieht sich auf einen Messerradhäcksler mit einem Scheibenrad, an dessen Vorderseite Messer befestigt sind und an dessen Umfang Wurfflügel angebracht sind.

Bei Messerradhäckslern dieser Art sind die Messer an der, der axialen Einlaßöffnung des Häckslergehäuses zugewandten Vorderseite des Messerrades im wesentlichen in radialer Richtung verlaufend befestigt. Die am Umfang des Messerrades angebrachten Wurfflügel nehmen das gehäckselte Erntegut entlang der Außenwand des Häckslergehäuses mit und befördern es durch die tangentiale Auslaßöffnung an der Außenwand des Häckslergehäuses in einen Auswurfkrümmer, durch den es ausgeworfen wird.

Eine allgemein übliche Bauart solcher Messerradhäcksler, ist beispielsweise aus dem Prospekt Nr. II/III 16 1180 16/11 Pöttinger bekannt. Bei dieser ist jedes Messer auf einem Messerbock aufgeschraubt, der seinerseits auf einem als Scheibenrad ausgebildeten Messerrad befestigt ist. Am Umfang des Scheibenrades sind zwischen den Messern Wurfflügel befestigt, die gewöhnlich dort verschraubt sind, um die Zahl der Wurfflügel je nach erforderlicher Auswurfleistung verändern zu können.

Das gehäckselte Erntegut gleitet dabei die keilförmige Rinne, die von Messer, Messerbock und Messerradscheibe gebildet ist, entlang nach außen, wo es von den Wurfflügeln erfaßt und ausgeworfen wird. Durch den engen Strömungsquerschnitt und durch seine Form tritt starke Turbulenz im Erntegut auf, verbunden mit starker innerer Reibung, zusätzlich zu der erheblichen äußeren Reibung an den Begrenzungswänden der Rinne, wodurch bedeutende Energiemengen aufgebraucht werden.

Bei dem vorerwähnten Häcksler erfolgt die Energieübertragung auf das Erntegut, sowohl für die Zerkleinerungsarbeit als auch für die Abführung desselben aus der Maschine durch Einleitung der Antriebskräfte in das Erntegut über das Häckselrad, das deshalb eine dementsprechend hohe Festigkeit und Steifigkeit aufweisen muß.

Bei den meisten Häckslern für die Bearbeitung von Silomais ist überdies noch eine Nachzerkleinerungsvorrichtung vorgesehen, von der ein Teil auf dem Messerrad befestigt ist und gewöhnlich aus Schlagkanten oder Schlagleisten oder dgl. besteht, während dessen anderer Teil an der äußeren Gehäusewand innen fest angebracht ist und aus einem Reibboden, wiederum mit Schlagkanten oder Schlagleisten, besteht. Diese Nachzerkleinerungsvorrichtungen benötigen sehr bedeutende Energiemengen, die gleichfalls über das Messerrad zugeführt werden müssen, wobei die einzuleitenden Kräfte ebenfalls ungleichförmig auftreten und zu den ungleichförmigen Schnittkräften hinzutreten.

Soll die Durchsatzleistung an Erntegut bei diesen Maschinen gesteigert werden, so muß entweder der Durchmesser des Messerrades oder dessen Drehzahl erheblich vergrößert werden, was in jedem Fall zu schweren, aufwendigen Konstruktionen mit steigender Präzision führt, wobei sehr schnell die Grenzen des wirtschaftlich Sinnvollen überschritten sind.

Sollen Maschinen dieser Art einfacher und leichter gebaut werden, so sind dem eben solcherart enge Grenzen gezogen. Neben den schon erwähnten sehr hohen, stoßweisen Belastungen des Messerrades durch die Schnittkräfte der Messer treten noch die über den Messerradumfang und die Wurfvorrichtung übertragenen Beschleunigungskräfte von der Auswurfvorrichtung her auf, welche das Messerrad im Umfangbereich einer bedeutenden Wechselbelastung aussetzen, die durch die, bei den meist noch Verwendung findenden Nachzerkleinerungsvorrichtungen auftretenden, am Messerradumfang eingeleiteten zusätzlichen Kräfte verstärkt werden.

Bei Gebläsehäckslern, wie etwa in der FR 1 544 166 beschrieben, läuft ein Gebläserad auf einer Messerwelle angetrieben um, wobei sternförmig angeordnete Messer auf einer hohlen Gebläseradwelle sitzen und gleichsinnig mit dieser umlaufen, während auf einer zweiten, in der Gebläseradwelle gelagerten Welle gegensinnig umlaufende Gegenschneiden für die Häckselmesser angebracht sind. Beide Messersätze sind frei ausragend auf ihren Antriebswellen befestigt.

Das DE-GM 1 680 526 zeigt einen Gebläsehäcksler zum Dreschen von Getreide, bei dem das Gebläserad auf der Welle des davor angeordneten Dreschrades antreibbar gelagert ist. Beide Räder laufen in gleicher Richtung angetrieben um, wobei sie die gleiche Umfangsgeschwindigkeit aufweisen, d.h. wegen des größeren Durchmessers des Gebläserades läuft dieses mit einer geringeren Drehzahl um. Diese liegt etwa bei der halben Umfangsgeschwindigkeit für Maishäcksler.

Aufgabe der Erfindung ist es, die Belastung des Messerrades bei einem Messerradhäcksler durch Verringerung der übertragenen Energie ohne Schmälerung der Zerkleinerungsleistung zu vermindern und gleichzeitig die Durchsatzleistung des Wurfrades bei gleichzeitig verringerter übertragener Energie beizubehalten.

Diese Aufgabe wird bei einem Messerradhäcksler nach dem Gattungsbegriff des Anspruches 1 durch die Merkmale des kennzeichnenden Teiles des Anspruches 1 gelöst.

Es wird dadurch erreicht, daß das Messerrad von einem sehr erheblichen Teil der Belastungen, besonders an seinem Umfangbereich, entlastet wird und daß durch die Verringerung der aufgewendeten Wurfenergie, die Verluste an Energie durch Reibung und Turbulenz des Erntegutes wesentlich herabgesetzt werden. Dadurch ist die Anpassung des Messerrades an die Schneidaufgabe und die Anpassung des Wurfrades an die Förderaufgabe besser möglich.

Auf diese Weise ist eine höhere Durchsatzleistung bei einer vorgegebenen Anordnung oder ein geringerer Energieverbrauch bei gleicher Durchsatzleistung der Maschine erzielbar, wobei die Gestaltung des Förderspaltes für den Durchtritt des Häckselgutes an dem Messerrad und die Anordnung der Wurfflügel der Auswurfvorrichtung des Wurfrades und ihre Zuordnung zu ersterem wesentlich zu dem guten Ergebnis dieser Maßnahmen beitragen. Nachweislich werden dadurch bedeutende Steigerungen der Durchsatzleistung bei Häckslern erreicht, wodurch diese Maschinen mit Schleppern geringerer Leistung betrieben werden können oder aber Messerradhäcksler mit Scheibenrädern höherer Durchsatzleistungen aufgebaut werden können.

Die Unteransprüche, auf die hier ausdrücklich verwiesen wird, betreffen besonders vorteilhafte Ausgestaltungen der Erfindung, deren Merkmale die Anpassung des Messerrades und des Wurfrades an gesteigerte Anforderungen in besonders günstiger Weise gestatten.

Die Herstellung eines günstigen Förderweges des gehäckselten Erntegutes von den Schneiden der Messer an, bis in den Bereich der Auswurfvorrichtung, welche eine Senkung des dafür erforderlichen Energieverbrauches durch Herabsetzung des Strömungswiderstandes des Erntegutes durch Verringerung der inneren und äußeren Reibung desselben zum Ziel hat, wird durch die abgestimmte Anwendung der Merkmale des Anspruches 1 erreicht und durch die Anwendung von Merkmalen der Unteransprüche verbessert. Besondere Bedeutung kommt dabei der Anordnung der Bauteile zueinander und deren Abmessungen zu, wobei in Bezug auf die einstellbaren Schnittlängen, bis zu einer maximalen Schnittlänge des Erntegutes, die Abhängigkeit von der Art des Erntegutes so zu berücksichtigen ist, daß für Halmgut, wie Gras, größere Abstände und Abmessungen erforderlich sind als für Mais.

Durch die Anwendung von Merkmalen der Unteransprüche auf die Gestaltung der Auswurfvorrichtung und auf die häufig vorgesehene Nachzerkleinerungsvorrichtung ist eine weitere Herabsetzung des spezifischen Energieverbrauches möglich. Durch die Anordnung und Gestaltung der Wurfflügel kann der Anteil des Energieverbrauches, für die Erzeugung des notwendigen Luftstromes, auf die unbedingt erforderliche Höhe abgesenkt werden und die Belastung des Wurfrades wird durch die getrennte Anordnung von Auswurf- und Nachzerkleinerungsvorrichtung besser auf dem Umfang verteilt .

Eine weitere Serie von Unteransprüchen betrifft besonders einfache und mechanisch stabile Anordnungen und Lagerungen des Messerrades und des Wurfrades, sowie die Anordnung der Antriebsvorrichtung und des Zuführungsgetriebes für die vorgeschalteten Hilfsvorrichtungen.

Die Erfindung wird im folgenden an Hand eines in der Zeichnung dargestellten Beispieles beschrieben.

In der Zeichnung zeigen:

Fig. 1 eine schematische Seitenansicht eines Feldhäckslers,

Fig. 2 einen Schnitt durch einen Messerradhäcksler senkrecht zur Drehachse des Messerrades,

Fig. 3 einen Axialschnitt durch einen Messerradhäcksler mit Durchtrittsspalt zwischen Messerrad und Wurfrad und

Fig. 4 einen Axialschnitt durch einen Messerradhäcksler mit einem aus Speichen gebildeten Messerrad.

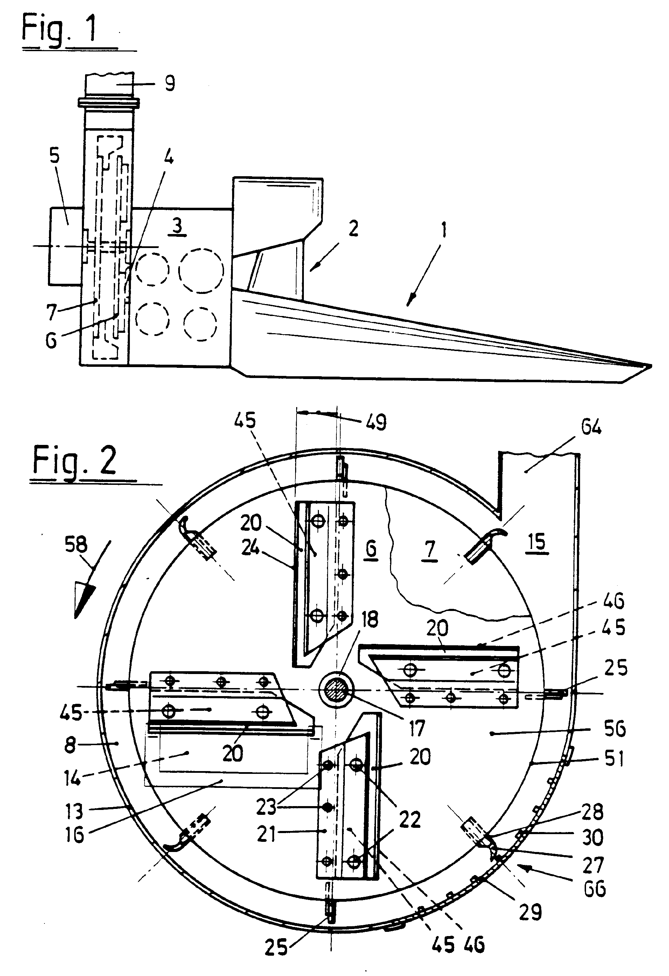

In Fig. 1 ist ein Feldhäcksler dargestellt, mit einer Aufnahmevorrichtung 1, einer sich daran anschließenden Abtrenn- und Einzugsvorrichtung 2 und einer Preßvorrichtung 3, die einer Häckselvorrichtung 4 mit Antriebsvorrichtung 5 vorgeschaltet sind. Die Preßwalzen der Preßvorrichtung 3 und das Häckselwerk der Häckselvorrichtung 4 sind angedeutet. Der Häckselvorrichtung 4 ist ein Auswurfkrümmer 9 nachgeordnet.

Die Häckselvorrichtung 4 besteht aus einem mit Messern 20 ausgestatteten Messerrad 6, das mit einer Messerradnabe 18 auf einer Messerradwelle 17 befestigt ist und in einem Häckslergehäuse 8 angetrieben umläuft, dessen Außenwand 13 mit einer Auslaßöffnung 15 versehen ist, die in einen Auslaßstutzen 64 führt, an den ein Auswurfkrümmer 9 angeflanscht ist (in Fig. 2)

Vor dem Messerrad 6 ist die vordere Stirnwand 11 des Häckslergehäuses 8 angeordnet, die mit einer Einlaßöffnung 14 versehen ist, in der eine Gegenschneide 16 angebracht ist, mit der die Schneiden 24 der Messer 20 zusammenarbeiten.

Hinter dem Messerrad 6 ist auf einer als Hohlwelle ausgebildeten Wurfradwelle 37 ein Wurfrad 7 befestigt, das die gleiche Drehachse 19 wie das Messerrad 6 besitzt. Die Messerradwelle 17 ist in der vorderen Stirnwand 11 des Häckslergehäuses 8 mit dem vorderen Messerradwellenlager 33 gelagert und mit der Verlängerung 59 über dieses hinausgeführt, an der das Abtriebsrad 35 für ein Zuführungsgetriebe für die vorgeschalteten Vorrichtungen 1,2,3 des Häckslers angebracht ist.

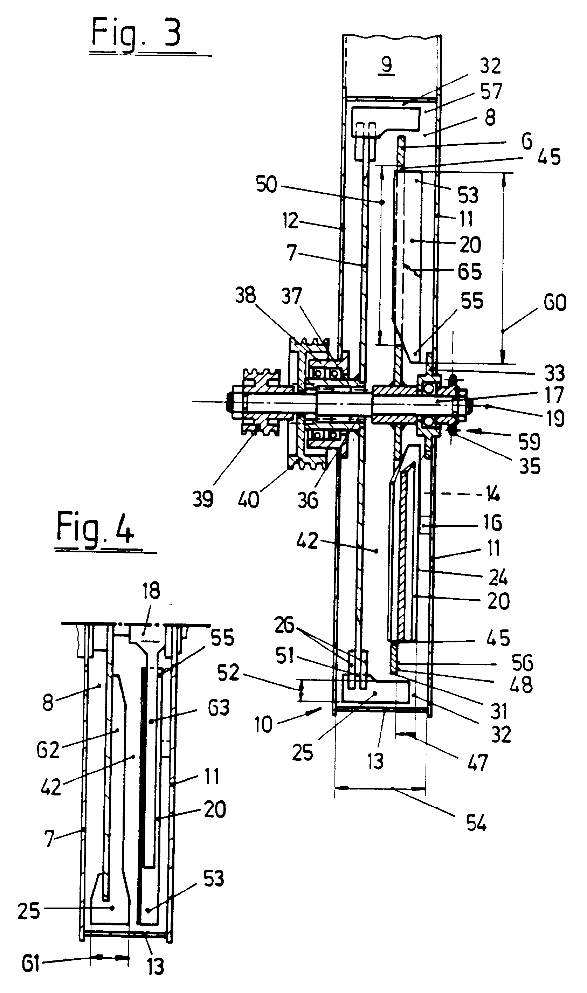

Mit dem anderen Ende ist die Messerradwelle 17 mit dem hinteren Messerradwellenlager 36 in der hohlen Wurfradwelle 37 gelagert, die ihrerseits mit dem Wurfradwellenlager 38 in der hinteren Stirnwand 12 des Häckslergehäuses 8 gelagert ist. Wurfradwelle 37 und Messerradwelle 17 sind über das Wurfradwellenlager 38 hinaus verlängert und tragen ein Antriebsrad 40 und ein Antriebsrad 39 für den getrennten Antrieb der beiden Wellen über die Antriebsvorrichtung 5. (Fig.3 ).

Das Messerrad 6 besteht aus einer Scheibe, die in Fig. 2 mit vier Durchlaßöffnungen 45 versehen ist, an deren, in Drehrichtung 58 gesehen, Vorderkante 46 die Messer 20 angeordnet sind. Die Messer 20 sind mit Messerverschraubungen 22 an Messerhaltern 21 befestigt, die ihrerseits mit Messerhalterverschraubungen 23 an der Vorderseite 56 des Messerrades 6 angeschraubt sind. Die Messer 20 sind in axialer Richtung des Messerrades 6 angestellt und reichen durch die Durchlaßöffnungen 45, eine Führung für das Erntegut bildend, hindurch. Die Länge 50 der Durchlaßöffnung 45 entspricht der Länge 60 der Messer 20 und reicht von den inneren Enden 55 bis zu den äußeren Enden 53 der Messer 20. Ihre Breite 49, die wenigstens die doppelte maximale Schnittlänge des Erntegutes beträgt, entspricht der Breite der Teile 65 der Messer 20, die die Vorderseite 56 des Messerrades 6 mit den Schneiden 24 in einem Abstand 47 von der Oberfläche 48 des Messerrades 6 überragen (Fig. 3).

Messerrad 6 und Wurfrad 7 sind im Abstand voneinander, einen Förderspalt für das Erntegut bildend, angeordnet, der eine Breite aufweist, die wenigstens dem Doppelten der maximalen Schnittlänge des Erntegutes entspricht.

Das Wurfrad 7 besteht aus einer Scheibe und trägt an seinem Umfang 51 Wurfflügelträger 26 an denen Wurfflügel 25 einer Auswurfvorrichtung 10 sich radial erstreckend befestigt sind, die in dem Raum 32 zwischen dem Umfang 31 des Messerrades 6, sowie dem Umfang 51 des Wurfrades 7 und der Außenwand 13 des Häckslergehäuses 8 umlaufen.

Die Wurfflügel 25 weisen eine radiale Höhe 52 auf, mit der sie in radialer Richtung nur den äußeren Teil des Raumes 32 zwischen Messerrad 6 und Außenwand 13 überdecken, so daß die Luftförderung sehr stark herabgesetzt ist und sind über die Breite 54 der Außenwand 13 des Häckslergehäuses 8 im Bereich des Förderspaltes 42, diesen beidseitig überragend, angeordnet (Fig.3).

Zwischen den Wurfflügeln 25 sind Reibteile 27 einer Nachzerkleinerungsvorrichtung 66 mit Reibteilträgern 28 über den Umfang 51 des Wurfrades 7 verteilt angebracht, die mit den Reibkanten 30 einer, in der Außenwand 13 des Häckslergehäuses 8 im Bereich zwischen Einlaßöffnung 14 und Auslaßöffnung 15 eingesetzten Reibplatte 29 zusammenarbeiten und das Erntegut nachträglich nochmals zerkleinern und dadurch aufschließen (Fig. 2).

Bei Anwendung eines Messerrades, das aus auf der Messerradnabe 18 aufgesetzten Speichen 63 besteht, ist zwischen diesen und dem Wurfrad 7 ein Förderspalt 42 wie bereits beschrieben vorgesehen und die äußeren Enden 53 der Messer 20 reichen bis an die Außenwand 13 des Häckslergehäuses 8, während die verbleibende Breite 61 durch Wurfflügel 25 überdeckt wird. Die Wurfflügel 25 reichen mit ihren inneren Teilen 62 bis in den Bereich der inneren Enden 55 der Messer 20 (Fig.4).

Das Messerrad 6 läuft mit doppelter bis dreifacher Drehzahl in der gleichen Drehrichtung 58 wie das Wurfrad 7 um.

Das gehäckselte Erntegut gelangt bei der Anordnung nach Fig.3 durch die Durchlaßöffnungen 45 in den Förderspalt 42 und wird zwischen Wurfrad 7 und Messerrad 6 nach außen befördert, wobei die Aufprallenergie der Gutteilchen nicht vollständig verlorengeht, sondern wenigstens teilweise genutzt wird, indem das auftreffende Teilchen seine Energie auf eines der Häckselräder überträgt, wobei es selbst abgebremst wird. Darüberhinaus kommen die Teilchen nicht zum Stillstand, sondern werden stetig weiterbefördert, so daß die Durchwirbelung gering gehalten ist. Das nach außen getretene Erntegut strömt an die Außenwand 13 des Häckslergehäuses 8 ab und wird dort von den Wurfflügeln 25 des Wurfrades 7 erfaßt und durch die Auslaßöffnung 15 in den Auslaßstutzen 64 und den Auswurfkrümmer 9 befördert. Bei Wurfflügeln 25, die nur den äußeren Teil 57 des Raumes zwischen Messerrad 6, Wurfrad 7 und Außenwand 13 überdecken, ist die geförderte Luftmenge wesentlich geringer, so daß der darauf entfallende Energieanteil eingespart wird.

Bei einer Anordnung nach Fig. 4, bei der das gehäckselte Erntegut zwischen den Speichen 63 hindurch in den Förderspalt 42 tritt, sind die Wurfflügel 25 mit inneren Teilen 62 versehen, die bis in den Bereich der inneren Enden 55 der Messer 20 reichen und eine sehr rasche Beförderung des Erntegutes nach außen bewirken und ein Abströmen des Erntegutes in den Bereich vor die Messer vermeiden, das zu erhöhten Reibungsverlusten an der stehenden Wand führen würde.

Legende :

| | |
|---|---|
| 1 | Aufnahmevorrichtung |
| 2 | Abtrenn-und Einzugsvorrichtung |
| 3 | Preßvorrichtung |
| 4 | Häckselvorrichtung |
| 5 | Antriebsvorrichtung |
| 6 | Messerrad |
| 7 | Wurfrad |
| 8 | Häckslergehäuse |
| 9 | Auswurfkrümmer |
| 10 | Auswurfvorrichtung |
| 11 | vordere Stirnwand des Häckslergehäuses |
| 12 | hintere Stirnwand des Häckslergehäuses |
| 13 | Außenwand des Häckslergehäuses |
| 14 | Einlaßöffnung in der vorderen Stirnwand 11 |
| 15 | Auslaßöffnung der Außenwand 13 |
| 16 | Gegenschneide |
| 17 | Messerradwelle |
| 18 | Messerradnabe |
| 19 | Drehachse des Messerrades 6 und des Wurfrades 7 |
| 20 | Messer |

21 Messerhalter
22 Messerverschraubung
23 Messerhalterverschraubung
24 Schneide des Messers 20
25 Wurfflügel der Auswurfvorrichtung 10
26 Wurfflügelträger
27 Reibteil
28 Reibteilträger
29 Reibplatte
30 Reibkante
31 Umfang des Messerrades 6
32 Raum zwischen Messerrad 6, dem Wurfrad 7 und der Außenwand 13
33 vorderes Messerradwellenlager
34
35 Abtriebsrad für Zuführungsgetriebe
36 hinteres Messerradwellenlager
37 Wurfradwelle
38 Wurfradwellenlager
39 Antriebsrad der Messerradwelle 17
40 Antriebsrad der Wurfradwelle
41
42 Förderspalt zwischen Messerrad 6 und Wurfrad 7
43
44
45 Durchlaßöffnung des Messerrades 6
46 Vorderkante der Durchlaßöffnung 45
47 Abstand zwischen Schneide 24 und Oberfläche 48 des Messerrades 6
48 Oberfläche des Messerrades 6
49 Breite der Durchlaßöffnung 45
50 Länge der Durchlaßöffnung 45
51 Umfang des Wurfrades 7
52 radiale Höhe des Wurfflügels 25
53 äußeres Ende des Messers 20
54 Breite der Außenwand 13
55 inneres Ende des Messers 20
56 Vorderseite des Messerrades 6
57 äußerer Teil des Raumes 32
58 Drehrichtung des Messerrades 6
59 Verlängerung der Messerradwelle 17
60 Länge der Messer 20
61 verbleibende Breite der Außenwand 13
62 innerer Teil des Wurfflügels 25
63 Speichen des Messerrades 6
64 Auslaßstutzen des Häckslergehäuses 8
65 Teil des Messer 20, der die Vorderseite 56 des Messerrades 6 überragt
66 Nachzerkleinerungsvorrichtung

**Patentansprüche**

1. Messerradhäcksler mit einem Häckslergehäuse (8) in dessen vorderer Stirnwand (11) eine Einlaßöffnung (14) und in dessen Außenwand (13) eine Auslaßöffnung (15) angebracht ist, an die ein Auslaßstutzen (64) anschließt und in dem ein Messerrad (6) an der Einlaßöffnung (15) auf einer Messerradwelle (17) angetrieben umläuft, mit Messern (20), deren Schneiden radial ausgerichtet sich in einer senkrechten Ebene auf die Messerradwelle (17) bewegen und an einer Gegenschneide (16) das Gut abschneiden und in dem ein Wurfrad (7) auf einer hohlen Wurfradwelle (37) in einem axialen Abstand zum Messerrad (6) befestigt, angetrieben umläuft, in der die Messerradwelle (17) gelagert ist und mit einer Auswurfvorrichtung (10), die das gehäckselte Gut durch die Auslaßöffnung (15) auswirft, wobei die Messerradwelle (17) und die Wurfradwelle (37) an der hinteren Stirnwand (12) des Häckslergehäuses (8) herausgeführt und mit Antriebsrädern (39,40) einer Antriebsvorrichtung (5) versehen sind, wobei das Messerrad (6) mit größerer Drehzahl gleichsinnig mit dem Wurfrad (7) angetrieben ist dadurch gekennzeichnet daß die Messer (20) des Messerrades (6) gegen eine feststehende, an der Einlaßöffnung (15) befestigten Gegenschneide (16) das Gut abschneiden und an Vorderkanten (46) von der Durchlaßöffnung (45) im Messerrad (6), mit den Schneiden (24) über die Oberfläche (48) des Messerrades (6) in einem Abstand (47) hervorragend befestigt sind, der der maximalen Schnittlänge des Erntegutes entspricht, wobei die Messer (20) zur Drehrichtung (58) schräg angestellt durch die Durchlaßöffnung (45) hindurchreichen und das Häckselgut in einen Förderspalt (42) zwischen Messerrad (6) und Wurfrad (7) leiten, der von Wurfflügeln (25) der Auswurfvorrichtung (10) des Wurfrades (7) in einem zwischen diesem, dem Messerrad (6) und der Außenwand (13) gebildeten Raum (32) beiderseits bis zu den Stirnwänden (11,12) des Häckslergehäuses (8) überragt wird und eine Breite aufweist, die den Durchtritt des Häckselgutes ermöglicht.

2. Messerradhäcksler nach dem vorhergehenden Anspruch, dadurch gekennzeichnet, daß das Messerrad (6) mit der mehrfachen Drehzahl des Wurfrades (7), vorzugsweise der zwei- bis dreifachen, angetrieben ist.

3. Messerradhäcksler nach einem der vorhergehenden Ansprüche, dadurch gekennzeichnet, daß der Förderspalt dem Mehrfachen, vorzugsweise dem Doppelten, der maximalen Schnittlänge des Häckselgutes entspricht.

4. Messerradhäcksler nach einem der vorhergehenden Ansprüche, dadurch gekennzeichnet, daß der Förderspalt (42) für das Häckseln von Gras wesentlich größer einzustellen ist als für Mais.

**5.** Messerradhäcksler nach einem der vorhergehenden Ansprüche, dadurch gekennzeichnet, daß die Durchlaßöffnungen (45) im wesentlichen radial verlaufend angeordnet sind und etwa die Länge (60) der Messer (20) aufweisen.

**6.** Messerradhäcksler nach einem der vorhergehenden Ansprüche, dadurch gekennzeichnet, daß die Durchlaßöffnungen (45) eine Breite (49) in Drehrichtung (58) des Messerrades (6) aufweisen, die wenigstens der Breite der Teile (65) der Messer (20) in Axialrichtung gesehen entspricht, die von der Vorderkante (46) der Durchlaßöffnung (45) bis zur Schneide (24) jedes Messers (20) reicht oder mindestens dem doppelten der maximalen Schnittlänge des Häckselgutes entspricht.

**7.** Messerradhäcksler nach einem der vorhergehenden Ansprüche, dadurch gekennzeichnet, daß die Durchlaßöffnungen (45) bis an den Umfang (31) des Messerrades (6) reichen und von den Messern (20) nach außen überragt werden, die mindestens bis an die Wurfflügel (25) des Wurfrades (7) heranreichen, wobei die Messer (20) an ihren inneren Enden (55) an dem Messerrad (6) befestigt sind und mit ihren äußeren Enden (53) frei ausragend angeordnet sind.

**8.** Messerradhäcksler nach einem der vorhergehenden Ansprüche, dadurch gekennzeichnet, daß die Wurfflügel (25) mit den am Umfang (51) des Wurfrades (7) befestigten Wurfflügelträgern (26) die Auswurfvorrichtung (10) bilden, wobei die Wurfflügel (25) im wesentlichen radial ausgerichtet sind und den Raum (32) außerhalb des Messerrades (6) und des Wurfrades (7) bis zur Außenwand (13) des Häckslergehäuses (8) im wesentlichen über deren gesamte Breite (54) von der vorderen Stirnwand (11) bis zur hinteren Stirnwand (12) und wenigstens den von der Außenwand (13) nach innen zu anschließenden Teil (57) überdecken.

**9.** Messerradhäcksler nach dem vorhergehenden Anspruch, dadurch gekennzeichnet, daß die Messer (20) mit den äußeren Enden (53) bis an die Außenwand (13) des Häckslergehäuses (8) reichen und die Wurfflügel (25) des Wurfrades (7) die verbleibende Breite zur hinteren Stirnwand (12) überdecken.

**10.** Messerradhäcksler nach einem der vorhergehenden Ansprüche, dadurch gekennzeichnet, daß das Wurfrad (7) mit Wurfflügeln (25) versehen ist, deren innere Teile (62), vorzugsweise bei einem, mit Speichen (63) ausgebildeten Messerrad (6), etwa radial nach innen, bis in den Bereich der inneren Enden (55) der Messer (20) reichen.

**11.** Messerradhäcksler nach einem der vorhergehenden Ansprüche, dadurch gekennzeichnet, daß an dem Wurfrad (7) an seinem Umfang (51) zwischen den Wurfflügeln (25) Reibteilträger (28) befestigt sind, an denen Reibteile (27) fest angebracht sind, die mit Reibkanten (30) von wenigstens einer Reibplatte (29) an der Außenwand (13) des Häckslergehäuses (8) im Bereich zwischen Einlaßöffnung (14) und Auslaßöffnung (15) angeordnet, zusammenarbeiten.

**12.** Messerradhäcksler nach einem der vorhergehenden Ansprüche, dadurch gekennzeichnet, daß die Wurfradwelle (37) mit einem Wurfradwellenlager (38) an der hinteren Stirnwand (12) des Häckslergehäuses (8) gelagert ist.

**13.** Messerradhäcksler nach einem der vorhergehenden Ansprüche, dadurch gekennzeichnet, daß die Wurfradwelle (37) mit dem hinteren Messerradwellenlager (36) auf der Messerradwelle (17) gelagert ist.

**14.** Messerradhäcksler nach einem der vorhergehenden Ansprüche, dadurch gekennzeichnet, daß die Messerradwelle (17) mit dem vorderen Messerradwellenlager (33) in der vorderen Stirnwand (11) des Häckslergehäuses (8) gelagert ist, auf deren Verlängerung (59) ein Abtriebsrad (35) eines Zuführungsgetriebes, zumindest für den Antrieb entweder einer Aufnahmevorrichtung (1) oder einer Abtrenn- und Einzugsvorrichtung (2) oder einer Preßvorrichtung (3) befestigt ist.

**15.** Messerradhäcksler nach einem der vorhergehenden Ansprüche, dadurch gekennzeichnet, daß die Wurfradwelle (37) und die Messerradwelle (17) an der hinteren Stirnwand (12) des Häckslergehäuses (8) über das Wurfradwellenlager (38) hinausgeführt und mit zugeordneten Antriebsrädern (39,40) der Antriebsvorrichtung (5) versehen sind.

**Claims**

**1.** Blade-wheel chopper having a chopper housing (8), in whose front end wall (11) is disposed an inlet opening (14) and in whose outer wall (13) is disposed an outlet opening (15), to which an outlet connection piece (64) is connected, and in which a blade wheel (6) at the inlet opening (15) is driven rotatably on a blade-wheel shaft (17), having chopping blades (20) whose cutting edges, radially aligned, move in a perpendicular plane to the blade-wheel shaft (17) and cut the material at an opposing cutting edge (16), and in which an impeller wheel (7) is rotatably driven, fastened at an axial distance from the blade wheel (6) on a hollow impeller-wheel shaft (37) in which the blade-wheel shaft (17) is supported, and having an ejection device (10) which ejects the chopped material through the outlet opening (15), the blade-wheel shaft (17) and the impeller-wheel shaft (37) being led out at the rear end wall (12) of the chopper housing (8) and being provided with drive wheels (39, 40) of a drive device (5) and the blade wheel (6) being driven at a higher speed in the same direction as the impeller wheel (7), characterized in that the chopping blades (20) of the blade wheel (6) cut the material against a stationary opposing cutting edge (16) fastened to the inlet opening (15) and are fastened at front edges (46) of the through opening (45) in the blade wheel (6) with the cutting edges (24) projecting over the surface (48) of the blade wheel (6) at a distance (47) corresponding to the maximum cut length of the crop material, with the chopping blades (20), adjusted obliquely relative to the direction of rotation (58), extending through the through opening (45) and directing the chopped material into a feed gap (42) between blade wheel (6) and impeller wheel (7), which gap has impeller blades (25) of the ejection device (10) of the impeller wheel (7) rising above it in a chamber (32) formed between said impeller wheel, the blade wheel (6) and the outer wall (13) on either side as far as the end walls (11, 12) of the chopper housing (8) and has a width which allows the chopped material to pass through.

2. Blade-wheel chopper according to the preceding claim, characterized in that the blade wheel (6) is driven at a speed which is a multiple of, preferably two to three times, the speed of the impeller wheel (7).

3. Blade-wheel chopper according to one of the preceding claims, characterized in that the feed gap corresponds to a multiple of, preferably to twice, the maximum cut length of the chopped material.

4. Blade-wheel chopper according to one of the preceding claims, characterized in that the feed gap (42) is to be set substantially wider for chopping grass than for chopping maize.

5. Blade-wheel chopper according to one of the preceding claims, characterized in that the through openings (45) are arranged so as to extend substantially radially and have approximately the length (60) of the chopping blades (20).

6. Blade-wheel chopper according to one of the preceding claims, characterized in that the through openings (45) have a width (49) in the direction of rotation (58) of the blade wheel (6) which corresponds at least to the width of the parts (65) of the chopping blades (20), viewed in an axial direction, which extends from the front edge (46) of the through opening (45) to the cutting edge (24) of each chopping blade (20), or corresponds at least to twice the maximum cut length of the chopped material.

7. Blade-wheel chopper according to one of the preceding claims, characterized in that the through openings (45) extend as far as the periphery (31) of the blade wheel (6) and have, projecting outwards beyond them, the chopping blades (20) which extend at least as far as the impeller blades (25) of the impeller wheel (7), the chopping blades (20) being fastened at their inner ends (55) to the blade wheel (6) and being disposed with their outer ends (53) projecting freely outwards.

8. Blade-wheel chopper according to one of the preceding claims, characterized in that the impeller blades (25) with the impeller blade carriers (26) fastened to the periphery (51) of the impeller wheel (7) form the ejection device (10), with the impeller blades (25) being aligned substantially radially and overlapping the chamber (32) outside of the blade wheel (6) and the impeller wheel (7) as far as the outer wall (13) of the chopper housing (8) substantially over the entire width (54) of said wall from the front end wall (11) to the rear end wall (12), and at least the part (57) adjoining from the outer wall (13) inwards.

9. Blade-wheel chopper according to the preceding claim, characterized in that the chopping blades (20) extend with their outer ends (53) as far as the outer wall (13) of the chopper housing (8) and the impeller blades (25) of the impeller wheel (7) overlap the remaining width up to the rear end wall (12).

10. Blade-wheel chopper according to one of the preceding claims, characterized in that the impeller wheel (7) is provided with impeller blades (25) whose inner parts (62), preferably in the case of a blade wheel (6) constructed with spokes (63), extend approximately radially inwards as far as into the region of the inner ends (55) of the chopping blades (20).

11. Blade-wheel chopper according to one of the preceding claims, characterized in that there are fastened to the impeller wheel (7), at its periphery (51) between the impeller blades (25), friction part carriers (28) on which are fixed friction parts (27), which cooperate with friction edges (30) of at least one friction plate (29) disposed on the outer wall (13) of the chopper housing (8) in the region between inlet opening (14) and outlet opening (15).

12. Blade-wheel chopper according to one of the preceding claims, characterized in that the impeller-wheel shaft (37) is supported with an impeller-wheel shaft bearing (38) on the rear end wall (12) of the chopper housing (8).

13. Blade-wheel chopper according to one of the preceding claims, characterized in that the impeller-wheel shaft (37) is supported with the rear blade-wheel shaft bearing (36) on the blade-wheel shaft (17).

14. Blade-wheel chopper according to one of the preceding claims, characterized in that the blade-wheel shaft (17) is supported with the front blade-wheel shaft bearing (33) in the front end wall (11) of the chopper housing (8), to the extension (59) of which shaft is fastened a drive wheel (35) of a feed mechanism, at least for the drive either of a receiving device (1) or a separating and draw-in device (2) or a pressing device (3).

15. Blade-wheel chopper according to one of the preceding claims, characterized in that the impeller-wheel shaft (37) and the blade-wheel shaft (17) are led out at the rear end wall (12) of the chopper housing (8) via the impeller-wheel shaft bearing (38) and are provided with associated drive wheels (39, 40) of the drive device (5).

## Revendications

1. Hacheur à roue à lames comprenant un carter (8) dans la paroi extrême antérieure (11) duquel un orifice d'entrée (14) est ménagé, et dans la paroi extérieure (13) duquel est pratiqué un orifice de sortie (15) dans lequel fusionne un manchon de sortie (64), carter dans lequel une roue (6) à lames est menée en rotation sur un arbre (17), au niveau de l'orifice d'entrée (15) ; des lames (20) dont les tranchants, orientés radialement, accomplissent un mouvement dans un plan perpendiculaire à l'arbre (17) de la roue à lames, et sectionnent le produit sur un contre-tranchant (16), une roue éjectrice (7) étant fixée à distance axiale de la roue (6) à lames, et étant menée en rotation sur un arbre creux (37) dans lequel l'arbre (17) de la roue à lames est monté ; et un dispositif de projection (10) qui projette le produit haché à travers l'orifice de sortie (15), l'arbre (17) de la roue à lames et l'arbre (37) de la roue éjectrice étant prolongés au-delà de la paroi extrême postérieure (12) du carter (8) du hacheur, et étant équipés de pignons menants (39, 40) d'un dispositif d'entraînement (5), la roue (6) à lames étant menée dans le même sens que la roue éjectrice (7), à une vitesse angulaire supérieure, caractérisé par le fait que les lames (20) de la roue (6) à lames sectionnent le produit sur un contre-tranchant fixe (16) assujetti à l'orifice d'entrée (15), et sont fixées à des arêtes antérieures (46) de l'orifice de passage (45) pratiqué dans la roue (6) à lames, en faisant saillie au-delà de la surface (48) de cette roue (6) à lames, par les tranchants (24), d'une distance (47) qui correspond à la longueur de coupe maximale du produit récolté, les lames (20), agencées à l'oblique par rapport au sens de rotation (58), traversant l'orifice de passage (45) et dirigeant le produit haché, entre la roue (6) à lames et la roue éjectrice (7), dans un interstice de convoyage (42) qui est couvert de part et d'autre par des ailettes projeteuses (25) du dispositif de projection (10) de la roue éjectrice (7), dans un espace (32) délimité entre cette dernière, la roue (6) à lames et la paroi extérieure (13), jusqu'aux parois extrêmes (11, 12) du carter (8) du hacheur, et qui présente une largeur autorisant le passage du produit haché.

2. Hacheur à roue à lames, selon la revendication précédente, caractérisé par le fait que la roue (6) à lames est entraînée à une vitesse angulaire représentant un multiple et comprise, de préférence, entre le double et le triple de celle de la roue éjectrice (7).

3. Hacheur à roue à lames, selon l'une des revendications précédentes, caractérisé par le fait que l'interstice de convoyage correspond à un multiple, de préférence au double de la longueur de coupe maximale du produit haché.

4. Hacheur à roue à lames, selon l'une des revendications précédentes, caractérisé par le fait que l'interstice de convoyage (42) est conçu pour être réglé notablement plus grand, pour hacher de l'herbe, que pour du maïs.

5. Hacheur à roue à lames, selon l'une des revendications précédentes, caractérisé par le fait que les orifices de passage (45) sont agencés avec étendue sensiblement radiale, et possèdent approximativement la longueur (60) des lames (20).

6. Hacheur à roue à lames, selon l'une des revendications précédentes, caractérisé par le fait que les orifices de passage (45) présentent, dans le sens de rotation (58) de la roue (6) à lames, une largeur (49) correspondant au moins, considérée dans le sens axial, à la largeur des parties (65) des lames (20) qui s'étend de l'arête antérieure (46) de l'orifice de passage (45) jusqu'au tranchant (24) de chaque lame (20), ou correspond au moins au double de la longueur de coupe maximale du produit haché.

7. Hacheur à roue à lames, selon l'une des revendications précédentes, caractérisé par le fait que les orifices de passage (45) s'étendent jusqu'au pourtour (31) de la roue (6) à lames et sont dépassés, vers l'extérieur, par les lames (20) qui se prolongent au moins jusqu'aux ailettes projeteuses (25) de la roue éjectrice (7), les lames (20) étant fixées à la roue (6) à lames par leurs extrémités internes (55), et étant agencées en porte-à-faux libre par leurs extrémités externes (53).

8. Hacheur à roue à lames, selon l'une des revendications précédentes, caractérisé par le fait que les ailettes projeteuses (25) forment le dispositif de projection (10) avec les supports (26) d'ailettes projeteuses qui sont fixés au pourtour (51) de la roue éjectrice (7), les ailettes projeteuses (25) étant orientées pour l'essentiel dans le sens radial en recouvrant l'espace (32) à l'extérieur de la roue (6) à lames et de la roue éjectrice (7) jusqu'à la paroi extérieure (13) du carter (8) du hacheur, sensiblement sur toute la largeur (54) de cette dernière, de la paroi extrême antérieure (11) jusqu'à la paroi extrême postérieure (12), ainsi qu'au moins la partie (57) se rattachant à la paroi extérieure (13) vers l'intérieur.

9. Hacheur à roue à lames, selon la revendication précédente, caractérisé par le fait que les lames (20) s'étendent par les extrémités externes (53) jusqu'à la paroi extérieure (13) du carter (8) du hacheur, et les ailettes projeteuses (25) de la roue éjectrice (7) recouvrent la largeur restante par rapport à la paroi extrême postérieure (12).

10. Hacheur à roue à lames, selon l'une des revendications précédentes, caractérisé par le fait que la roue éjectrice (7) est pourvue d'ailettes projeteuses (25) dont les parties intérieures (62), de préférence en présence d'une roue (6) à lames dotée de rayons (63), s'étendent sensiblement vers l'intérieur, dans le sens radial, jusque dans la zone des extrémités internes (55) des lames (20).

11. Hacheur à roue à lames, selon l'une des revendications précédentes, caractérisé par le fait que des supports (28) de pièces de frottement sont fixés à la roue éjectrice (7) sur son pourtour (51), entre les ailettes projeteuses (25), supports auxquels sont assujetties des pièces de frottement (27) qui coopèrent avec des arêtes de frottement (30) d'au moins une plaque de frottement (29) installée sur la paroi extérieure (13) du carter (8) du hacheur, dans la région située entre l'orifice d'entrée (14) et l'orifice de sortie (15).

12. Hacheur à roue à lames, selon l'une des revendications précédentes, caractérisé par le fait que l'arbre (37) de la roue éjectrice est monté, par un palier (38), sur la paroi extrême postérieure (12) du carter (8) du hacheur.

13. Hacheur à roue à lames, selon l'une des revendications précédentes, caractérisé par le fait que l'arbre (37) de la roue éjectrice est monté sur l'arbre (17) de la roue à lames par le palier postérieur (36) dudit arbre de la roue à lames.

14. Hacheur à roue à lames, selon l'une des revendications précédentes, caractérisé par le fait que l'arbre (17) de la roue à lames est monté dans la paroi extrême antérieure (11) du carter (8) du hacheur par le palier antérieur (33) dudit arbre de la roue à lames, sur le prolongement (59) duquel est fixé un pignon mené (35) d'une transmission d'amenée en vue d'assurer au moins l'entrainement d'un dispositif récepteur (1), d'un dispositif (2) de séparation et d'introduction, ou d'un dispositif de compression (3).

15. Hacheur à roue à lames, selon l'une des revendications précédentes, caractérisé par le fait que l'arbre (37) de la roue éjectrice et l'arbre (17) de la roue à lames sont prolongés au-delà de la paroi extrême postérieure (12) du carter (8) du hacheur par l'intermédiaire du palier (38) de l'arbre de la roue éjectrice, et sont munis de pignons menants associés (39, 40) du dispositif d'entraînement (5).

## Fig. 1

## Fig. 2

Fig. 3

Fig. 4